(19) **Europäisches Patentamt European Patent Office Office européen des brevets**

(11) **EP 2 230 547 B1**

(12) **EUROPEAN PATENT SPECIFICATION**

(45) Date of publication and mention
of the grant of the patent:
**16.03.2016 Bulletin 2016/11**

(51) Int Cl.:
***G02B 27/00*** *(2006.01)*          *G02B 1/10* *(2006.01)*
***G02B 5/04*** *(2006.01)*          *H04M 1/02* *(2006.01)*

(21) Application number: **10002821.6**

(22) Date of filing: **17.03.2010**

(54) **Electronic device comprising display unit with a window**

Elekronische Vorrichtung mit Anzeigeeinheit und Fenster

Dispositif électronique avec unité d'affichage et fenêtre

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **20.03.2009 KR 20090024166**

(43) Date of publication of application:
**22.09.2010 Bulletin 2010/38**

(73) Proprietor: **LG ELECTRONICS INC.
Youngdungpo-gu
Seoul 150-721 (KR)**

(72) Inventors:
 • **Tho, Gi-Hoon
   Geumcheon-Gu
   Seoul (KR)**
 • **Lee, Jae-Wook
   Gwangmyeong
   Gyeonggi-Do (KR)**
 • **Yang, Seung-Su
   Geumcheon-Gu
   Seoul (KR)**

 • **Park, Seok-Yong
   Geumcheon-Gu
   Seoul (KR)**
 • **Im, Young-Tae
   Manan-Gu
   Anyang, Gyeonggi-Do (KR)**
 • **Kim, Min-Soo
   Yangcheon-Gu
   Seoul (KR)**

(74) Representative: **Katérle, Axel
   Wuesthoff & Wuesthoff
   Patentanwälte PartG mbB
   Schweigerstraße 2
   81541 München (DE)**

(56) References cited:
**WO-A2-2008/116994          US-A1- 2006 132 945
US-A1- 2009 041 984          US-A1- 2010 033 818
US-B1- 6 950 234**

**Description**

BACKGROUND OF THE INVENTION

1. Field of the Invention

The present invention relates to an electronic device, comprising a terminal body having a display mounted thereon, and a window disposed on a front surface of the display. The window is configured to input information in a touch manner.

2. Background of the Invention

A mobile terminal is a device that can be carried around and has one or more functions such as performing voice and video call communications, inputting and outputting information, storing data, and the like.

These various functions include video and voice call communications, still or moving images capturing using a camera, voice storing, music file reproducing through a speaker system, image or video displaying, etc. Some terminals include additional functions such as playing games, and other terminals are implemented as multimedia players. Moreover, recent terminals are configured to allow a user to view video or television programs by receiving broadcasting or multicast signals.

Various attempts have been made to implement enhanced functions of the terminal not only by structural improvements, but also by hardware or software improvements. For instance, the mobile terminal provides a user interface (UI) for allowing a user to easily and conveniently search or select desired functions.

The mobile terminal may be also provided with a touch sensor configured to directly operate a desired function selected from a plurality of functions outputted to a display. However, when a user's finger comes in contact with the display, fingerprints may remain on a window to cause the display to have a degraded appearance.

The user mainly views the display of the mobile terminal in a bright place under the sunlight or illumination, rather than in a dark place. While the light is made to be incident onto the display through the touch sensor and the window, the display may have lowered visibility due to the difference between refractive indexes of each layer.

Document US 6,950,234 B1 teaches to form a pattern of protrusions (referred to by 24a in the document) "on the back of a protective film". The transparent synthetic resin protective film is mounted on prisms of a synthetic resin prism lens. The rough surface of the protective film comprises micro-protrusions and recesses facing the prism lens.

Document US 2006/0132945 A1 describes an optical film comprising a transparent reflection film on the surface of which a plurality of surface reflection distribution areas are provided, each area containing at least one microstructure. The optical film comprises a substrate supporting thereon a reflecting layer and fine prismatic microstructures shaped like a quadrangular truncated pyramid on the surface thereof.

Document WO 2008/116994 A2 describes a nanotextured surface with superhydrophobic properties, comprising a network of regular vertical tabs, the tab network fulfilling a surface fraction condition and the tabs having a height of a few 100 nm.

Document US 2009/0041984 A1 relates to coatings having stochastic surface roughness or a sinusoidal shape. A composite coating affects the light diffraction through said coating.

Document US 2010/0033818 A1, which is published after the priority date, describes a transparent protective layer. The protective layer is disposed onto a surface of a substrate, exemplary on an optical display. Various shapes of microstructures and patterns of microstructures intended to reduce the visibility of fingerprints are shown.

SUMMARY OF THE INVENTION

Therefore, an object of the present invention is to provide an electronic device having a window for a display unit capable of minimizing fingerprints remaining thereon and capable of preventing visibility of a display unit from being lowered, and a mobile terminal having the same.

To achieve these and other advantages and in accordance with the purpose of the present invention, as embodied and broadly described herein, there is provided an electronic device comprising a terminal body having a display mounted thereon; and a window disposed on a front surface of the display according to claim 1.

The protective layer may be formed of a ultraviolet rays (UV) cure resin.

The protective layer may be configured such that its refractive index is in a range of 1.45 - 1.59.

The electronic device can be a mobile terminal.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a front perspective view of a mobile terminal having a window mounted thereon according to the present invention;

FIG. 2 is a rear perspective view of the mobile terminal of FIG. 1;

FIG. 3 is a disassembled perspective view showing a configuration of a window according to the present invention;

FIG. 4 is an enlarged perspective view of an anti-fingerprint pattern of the window according to the present invention;

FIG. 5 is an enlarged sectional view showing a state that a finger comes in contact with the surface of the window according to the present invention;

FIG. 6 is a side sectional view showing a structure and an arrangement of micro-protrusions having an anti-fingerprint pattern according to the present invention;

FIGS. 7A to 7E are views sequentially showing an anti-fingerprint pattern forming process according to the present invention;

FIG. 8 is an enlarged planar view of the anti-fingerprint pattern of the window according to the present invention;

FIGS. 9 and 10 are planar views showing another examples of the anti-fingerprint pattern according to the present invention; and

FIG. 11 is a block diagram of the mobile terminal according to the present invention.

DETAILED DESCRIPTION OF THE INVENTION

Description will now be given in detail of the present invention, with reference to the accompanying drawings.

Hereinafter, a mobile terminal according to the present invention will be explained in more detail with reference to the attached drawings. The suffixes attached to components of the wireless speaker, such as 'module' and 'unit or portion' were used for facilitation of the detailed description of the present invention. Therefore, the suffixes do not have different meanings from each other.

A terminal may be implemented in various types. For instance, the terminal in the present description includes a mobile terminal such as a portable phone, a smart phone, a notebook computer, a digital broadcasting terminal, Personal Digital Assistants (PDA), Portable Multimedia Player (PMP), a navigation system, and a fixed terminal such as a digital TV, a desktop computer, etc. It is assumed that the terminal of the present invention is a mobile terminal. However, it will be obvious to those skilled in the art that the present invention may be also applicable to the fixed terminal, except for specific configurations for mobility.

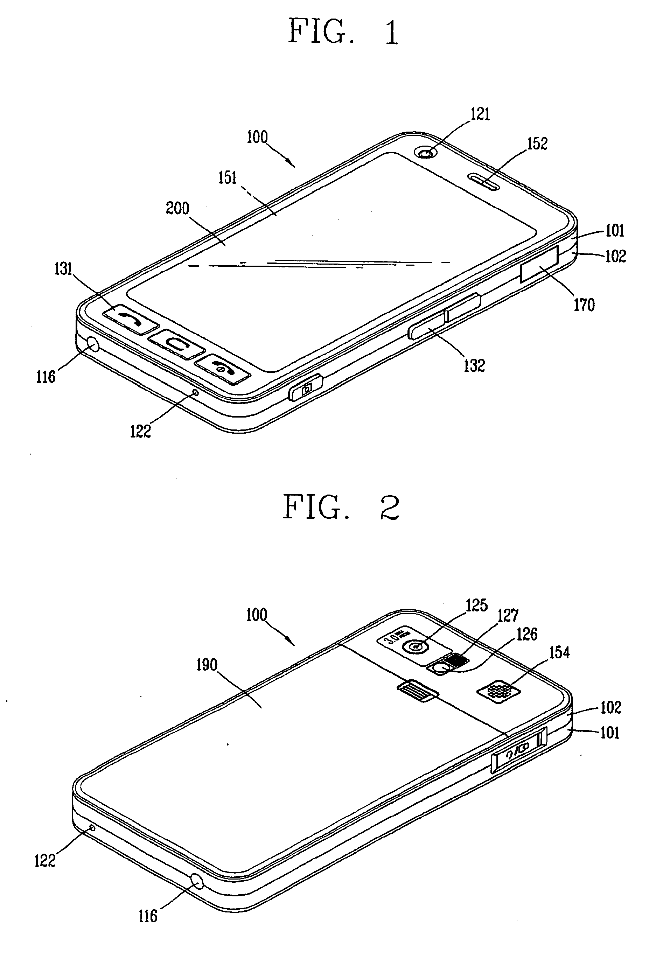

FIG. 1 is a front perspective view of a mobile terminal having a window mounted thereon according to the present invention.

The mobile terminal 100 described in the present invention is a bar type. However, the present invention is not limited to the type, but applicable to various configurations, such as a slide type having two bodies coupled to each other to be relatively movable, a folder type, a swing type, a swivel type and the like.

A case (casing, housing, cover, etc.) forming an outer appearance of a terminal body may be formed from a front case 101 and a rear case 102. A space formed by the front case 101 and the rear case 102 may accommodate various components therein. At least one intermediate case may further be disposed between the front case 101 and the rear case 102. Such cases may be formed by injection-molded synthetic resin, or may be formed using a metallic material such as stainless steel (STS) or titanium (Ti).

On a front surface of the terminal body, may be disposed a display unit 151, an audio output module 152, a camera 121, etc.

The display unit 151 may be implemented as a liquid crystal display (LCD), an organic light emitting diode (OLED), an e-paper, etc. The display unit 151 may include a touch sensor configured to allow for an inputting operation in a tactile manner. Thus, when a point on the display unit 151 is touched, content corresponding to the touched position is inputted. The content inputted in the tactile manner may be characters, numbers, menu items that can be indicated or designated in various modes, and the like. The touch sensing unit may be light-transmissive to allow the display unit 151 to be seen, and may have a structure for enhancing visibility of the touch screen in a bright area. Referring to FIG. 1, the display unit 151 occupies most parts of a front surface of the front case 101.

At an outer side of the display unit 151, installed is a window 200 configured to protect the display unit 151 from the outside and onto which a user's finger contacts for a touch input. The window 200 is formed such that the user's fingerprints remaining thereon is minimized.

The audio output module 152 may be implemented as a receiver for transmitting a call sound to a user's ear, or a loud speaker for outputting various alarm sounds or multimedia reproduction sounds.

On a side surface of the terminal body, disposed are a side key 132, an interface unit 170, an audio input module 122, etc.

The side key 132 may be referred to as a manipulation unit, and may be configured to receive a command for controlling the operation of the mobile terminal 100. The side key 132 may include any type of side key input by a user in a tactile manner. For instance, through the side key 132, various commands may be input. The commands may include a command for controlling a video input module 125, a command for controlling sizes of sounds outputted from a video input module 152, or a command for converting a current mode of the display unit 151 into a touch recognition mode, etc.

The audio input module 122 may be implemented as a microphone so as to receive a user's voice, other sound, etc.

The interface unit 170 may generally be implemented to interface the mobile terminal 100 with external devices. For instance, the interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as 'identification device') may be implemented in a type of smart card. Hence, the identification device can be coupled to the mobile terminal 100 via a port.

Also, the interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

FIG. 2 is a rear perspective view of the mobile terminal of FIG. 1.

As shown in FIG. 2, a rear surface of the terminal body may further be provided with a second video input module (camera) 125. The second camera 125 faces a direction which is opposite to a direction faced by the first camera 121, and may have different pixels from those of the first camera 121.

For example, the first camera 121 may operate with relatively lower pixels (lower resolution). Thus, the first camera 121 may be useful when a user can capture his face and send it to another party during a video call or the like. On the other hand, the second camera 125 may operate with a relatively higher pixels (higher resolution) such that it can be useful for a user to obtain higher quality pictures for later use. The second camera 125 may be installed at the terminal body so as to be rotatable or pop-up.

A flash 127 and a mirror 126 may additionally be disposed adjacent to the second camera 125. The flash 127 operates in conjunction with the second camera 125 when taking a picture using the second camera 125. The mirror 126 can cooperate with the second camera 125 to allow a user to photograph himself in a self-portrait mode.

A second audio output module 154 may further be disposed on a rear surface of the terminal body. The second audio output module 154 can cooperate with the first audio output module 152 to provide stereo output. Also, the second audio output module 154 may be configured to operate as a speakerphone.

A power supply unit 190 for supplying power to the mobile terminal 100 is mounted to a rear surface of the terminal body. The power supply unit 190 may be internally mounted to the terminal body, or may be implemented as a rechargeable battery to be detachably mounted to the terminal body.

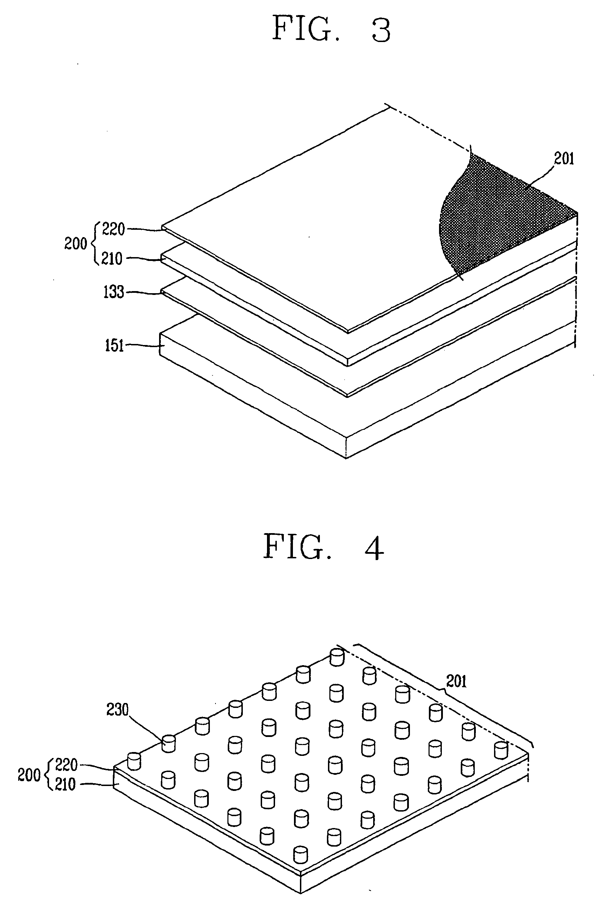

FIG. 3 is a disassembled perspective view showing a configuration of a window according to the present invention.

Referring to FIG. 3, a window 200 is mounted on the display unit 151, and a touch sensor 133 for touch recognition is mounted at an inner side of the window 200. The touch sensor 133 may be integrally attached to the window 200.

The window 200 includes a base layer 210, and a protective layer 220 formed on an upper surface of the base layer 210.

The base layer 210 is formed to protect the display unit 151, and to endure an impact or a load of the mobile terminal. Accordingly, as the base layer 210, may be used resins such as Polymethymethacrylate(PMMA), Polycarbonate(PC), and Polyethylene Terephthalate(PET), or a reinforcing glass for reducing a thickness and enhancing a strength, etc.

The protective layer 220 is formed at an uppermost layer of the window 200, and comes in contact with a user's finger for touch input. An anti-fingerprint pattern 201 having a micro structure is formed on the surface of the protective layer 220 so as to minimize fingerprints remaining on the window 200.

FIG. 4 is an enlarged perspective view of an anti-fingerprint pattern of the window according to the present invention. Referring to FIG. 4, the anti-fingerprint pattern 201 includes a plurality of micro-protrusions 230 having a repeated and regular structure. The micro-protrusions 230 prevent the user's finger from directly contacting a bottom surface of the protective layer 220, thereby minimizing the user's fingerprints remaining on the surface of the protective layer 220, and minimizing lowering of visibility of the display unit 151. Furthermore, the micro-protrusions 230 having a repeated and regular structure is optimized even at a design step so as to enhance visibility of the display unit 151 and to minimize the user's fingerprints remaining on the window 200.

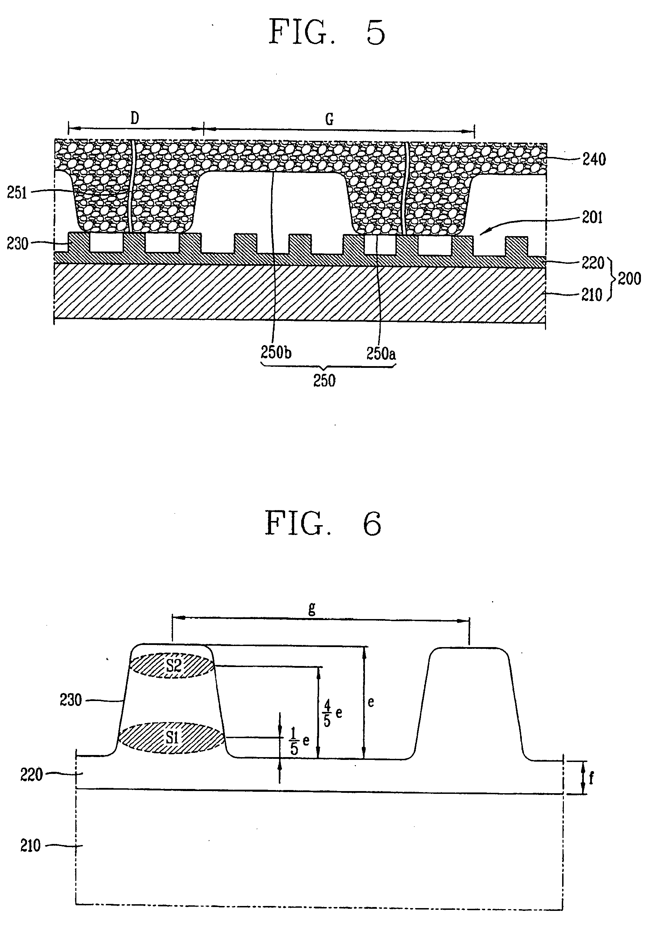

FIG. 5 is an enlarged sectional view showing a state that a user's finger comes in contact with the surface of the window according to the present invention.

As shown in FIG. 5, the surface of a finger 240 includes mountain portions 250a and valley portions 250b regularly arranged with a predetermined pitch (G) therebetween. Sweat and fattiness, main factors of the fingerprints remaining on the window are mainly discharged from sweat glands 251 formed at the mountain portions 250. Accordingly, it is necessary to prevent the mountain portions 250a having the sweat glands 251 from directly contacting a main region of the protective layer 220.

At least one micro-protrusion 230 is disposed within a width (D) of each of the mountain portions 250a. This may allow the mounting portion 250a to contact only an upper surface of the micro-protrusion 230, but prevent the mountain portion 250a from contacting other regions rather than the micro-protrusion 230. FIG. 5 shows that three micro-protrusions 230 support one mountain portion 250a.

FIG. 6 is a side sectional view showing a structure and an arrangement of micro-protrusions having an anti-fingerprint pattern according to the present invention.

A structure and an arrangement of micro-protrusions may be implemented with consideration of many factors, so as to minimize the user's fingerprints remaining on the window and to enhance visibility of the display unit 151. For instance, a larger number of the micro-protrusions 230 are preferably required to minimize the user's fingerprints remaining on the window. On the other hand, a smaller number of the micro-protrusions 230 are preferably required to minimize lowering of visibility of the display unit 151. The shape of the micro-protrusions 230 may influence on visibility of the display unit 151. For instance, when the micro-protrusion 230 has a sharp shape (e.g., corn or pyramid shape), or an irregular shape, the display may have lowered visibility. When the micro-protrusion 230 has a higher height, an identification characteristic for the user's fingerprints remaining on the window is degraded. However, in this case, the window 200 is susceptible to scratches due to an external object or impacts applied thereon.

A pitch (g) between the micro-protrusions 230 may be determined based on an average user's minimum value with consideration of a width (D) of the mountain portion 250a on which the user's finger is located. For instance, the width (D) of the mountain portion 250a on which the average user's finger is located has a minimum value of 209 $\mu$m, and a plurality of micro-protrusions 230 may be located at one mountain portion 250a.

When the micro-protrusion 230 has a very low height, foreign materials on the user's finger may contact the surface of the protective layer 220. On the other hand, when the micro-protrusion 230 has a very high height, a structure of the micro-protrusion 230 is not easily maintained due to an external friction. Accordingly, the present invention proposes the micro-protrusion 230 having a height of 5 $\mu$m - 30 $\mu$m.

A first horizontal sectional area (S1) of each micro-protrusion 230 at a height of 1/5(e) and a second horizontal sectional area (S2) of each micro-protrusion 230 at a height of 4/5(e) satisfy a following relation, 0.8S1 < S2 < S1. When the second horizontal sectional area (S2) is less than 0.8S1, visibility of the display unit 151 is significantly lowered. On the other hand, when the second horizontal sectional area (S2) is more than 1.0S1, it is difficult to fabricate the window, and visibility of the display unit 151 is not enhanced.

The protective layer 220 and the micro-protrusion 230 may be formed of UV cure resins.

A ratio (n) of total sectional areas of lower ends of the micro-protrusions 230 with respect to a surface area of the protective layer 220 may be in a range of 1 ~ 40 %. When the 'n' exceeds 40, visibility of the display unit 151 may be degraded.

A thickness of the protective layer 220 except for the micro-protrusion 230 may be 9 $\mu$m or more than. When the thickness of the protective layer 220 is less than 9 $\mu$m, a strength for supporting the protrusion is weak when a force is applied to the micro-protrusion 230 by an external friction. On the other hand, when the protective layer 220 has a thickness more than 9 $\mu$m, the protective layer 220 has a hardness different from a hardness when it has a thickness less than 9 $\mu$m, by at least one with using a hardness meter.

An average pitch between the micro-protrusions 230 is 10 $\mu$m ~ 53 $\mu$m. When the average pitch is less than 10 $\mu$m, the display unit 151 may have lowered visibility, and foreign materials in the air may contact the surface of the protective layer 220 (generally, when the average pitch is more than 10 $\mu$m). When the average pitch is more than 53 $\mu$m, a user's fingerprints may remain on the surface of the protective layer 220 due to downward deformation of the user's skin.

The protective layer 220 may have a refraction index of 1.45 ~ 1.59. The entire refraction index of light is reduced by reducing a difference between a refraction index of the base layer 210. Accordingly, the refraction index of the protective layer 220 is determined with consideration of the difference. A material of the base layer 210, such as PC, PET, PMMA, and glass has a refraction index of 1.45~1.59.

The average pitch (g) between the micro-protrusions, the height (e) of the micro-protrusion, and the ratio (n) of total sectional areas of lower ends of the micro-protrusions with respect to a surface area of the protective layer may satisfy the following relation, $15 < (g \times e/n) < 105$. Here, the 'g' and 'e' have a unit of $\mu$m, respectively, and 'n' has a unit of %.

When the (gxe/n) is less than 15, the display unit 151 has lowered visibility. On the other hand, when the $(g \times e/n)$ is more than 105, an anti-fingerprint characteristic is degraded.

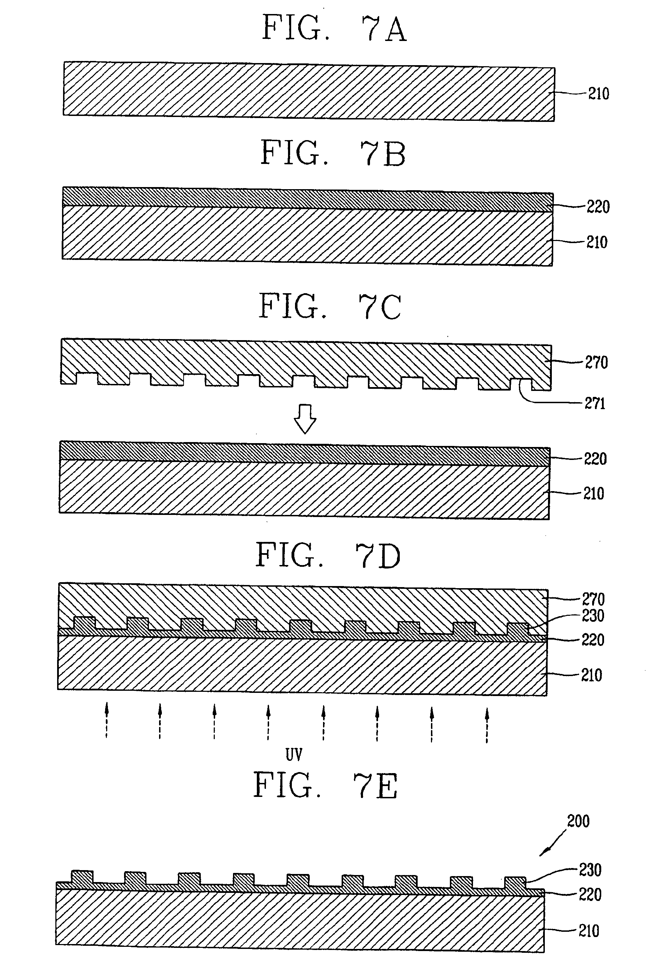

FIGS. 7A to 7E are views sequentially showing an anti-fingerprint pattern forming process according to the present invention.

Hereinafter, a method for fabricating a window according to the present invention will be explained.

As shown in FIG. 7A, prepared is the base layer 210 having a predetermined thickness and formed of PMMA, PC, PET or glass.

As shown in FIG. 7B, the protective layer 220 cured by ultraviolet rays is deposited on the surface of the base layer 210.

As shown in FIG. 7C, a mold 270 having convex-concaved patterns 271 where the micro-protrusions 230 are to be formed is made to contact the protective layer 220 with a predetermined thickness. The surface of the protective layer 220 is formed to have the same shape as the convex-concaved patterns 271 of the mold 270. And, the thickness of the protective layer 220 is influenced by a pressed degree of the mold 270.

In a state that the mold 270 is pressed by a predetermined force toward the protective layer 220 in a liquid phase, ultraviolet rays are irradiated onto the protective layer 220.

As shown in FIG. 7D, the ultraviolet rays are irradiated from a lower side of the base layer 210, i.e., an opposite side to the mold 270, for prevention of being shielded by the mold 270. Accordingly, the ultraviolet rays (UV) is transmitted to the protective layer 220 via the base layer 210, thereby curing the protective layer 220.

As shown in FIG. 7E, once the protective layer 220 is cured, the mold 270 is removed to complete the window 200.

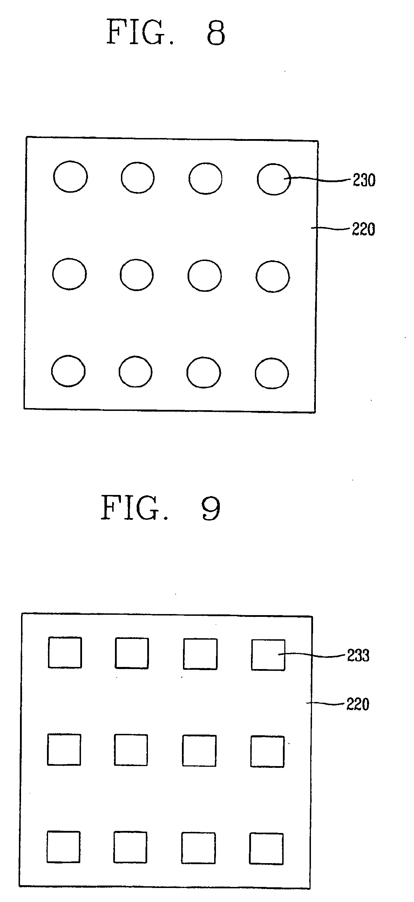

FIG. 8 is an enlarged planar view of the anti-fingerprint pattern of the window according to the present invention. FIG. 8 shows that the micro-protrusions 230 have a circular planar shape.

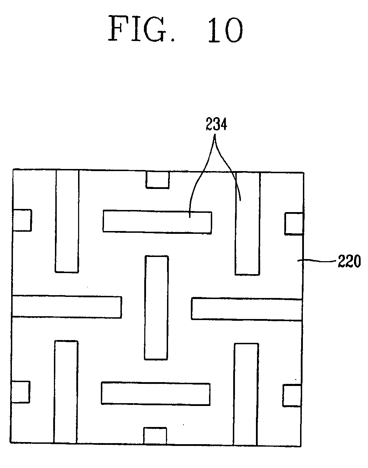

FIGS. 9 and 10 are planar views showing another examples of the anti-fingerprint pattern according to the present invention. As shown in FIGS. 9 and 10, the micro-protrusions 233 may be formed in various shapes. More concretely, the micro-protrusions 233 may be formed in a square shape as shown in FIG. 9, and may be formed in a rectangular shape as shown in FIG. 10. Alternatively, the micro-protrusions 233 may be formed in a composite shape. In this case, the aforementioned structure, pitch, etc. of the micro-protrusions may be also applied.

Under these configurations, the user's fingerprints remaining on the surface of the window can be minimized due to the anti-fingerprint pattern having regular and repeated micro-protrusions. And, lowering of visibility of the display unit can be prevented.

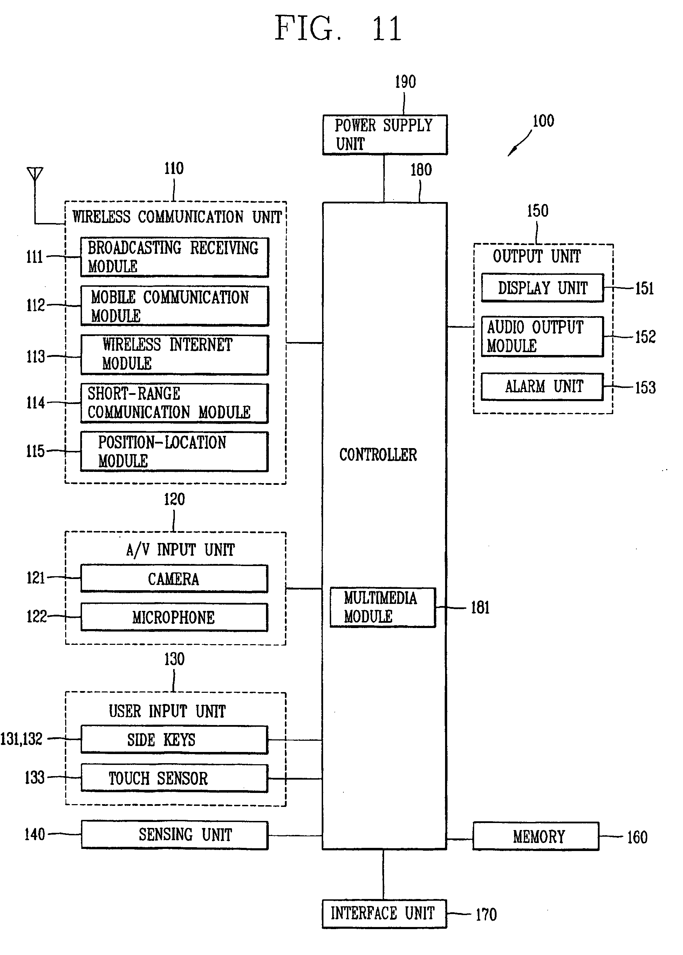

FIG. 11 is a block diagram of the mobile terminal according to the present invention.

The mobile terminal 100 may comprise components, such as a wireless communication unit 110, an Audio/Video (A/V) input unit 120, a user input unit 130, a sensing unit 140, an output unit 150, a memory 160, an interface unit 170, a controller 180, a power supply unit 190 and the like. FIG. 11 shows the mobile terminal 100 having various components, but it is understood that implementing all of the illustrated components is not a requirement. Greater or fewer components may alternatively be implemented.

Hereinafter, each component is described in sequence.

The wireless communication unit 110 may typically include one or more modules which permit wireless communications between the mobile terminal 100 and a wireless communication system or between the mobile terminal 100 and a network within which the mobile terminal 100 is located. For example, the wireless communication unit 110 may include a broadcast receiving module 111, a mobile communication module 112, a wireless internet module 113, a short-range communication module 114, a position location module 115 and the like.

The broadcast receiving module 111 receives a broadcast signal and/or broadcast associated information from an external broadcast managing entity via a broadcast channel. The broadcast channel may include a satellite channel and a terrestrial channel. The broadcast managing entity may indicate a server which generates and transmits a broadcast signal and/or broadcast associated information or a server which receives a pre-generated broadcast signal and/or broadcast associated information and sends them to the mobile terminal. The broadcast signal may be implemented as a TV broadcast signal, a radio broadcast signal, and a data broadcast signal, among others. The broadcast signal may further include a data broadcast signal combined with a TV or radio broadcast signal.

Examples of broadcast associated information may include information associated with a broadcast channel, a broadcast program, a broadcast service provider, and the like. The broadcast associated information may be provided via a mobile communication network, and received by the mobile communication module 112.

The broadcast associated information may be implemented in various formats. For instance, broadcast associated information may include Electronic Program Guide (EPG) of Digital Multimedia Broadcasting (DMB), Electronic Service Guide (ESG) of Digital Video Broadcast-Handheld (DVB-H), and the like.

The broadcast receiving module 111 may be configured to receive digital broadcast signals transmitted from various types of broadcast systems. Such broadcast systems may include Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), Integrated Services Digital Broadcast-Terrestrial (ISDB-T) and the like. The broadcast receiving module 111 may be configured to be suitable for every broadcast system transmitting broadcast signals as well as the digital broadcasting systems.

Broadcast signals and/or broadcast associated information received via the broadcast receiving module 111 may be stored in a suitable device, such as a memory 160.

The mobile communication module 112 transmits and receives radio signals to and from at least one of a base station, an external terminal and a server. Such radio signals may include a voice call signal, a video call signal or various types of data according to text/multimedia message transmission and reception.

The wireless Internet module 113 refers to a module for a wireless Internet access. This module may be internally or externally coupled to the terminal. The wireless Internet technique may include a WLAN (Wireless LAN) (Wi-Fi), Wibro (Wireless broadband), Wimax (World Interoperability for Microwave Access), HSDPA (High Speed Downlink Packet Access), etc.

The short-range communication module 114 refers to a module for short-range communication. As the short range communication technologies, Bluetooth, radio frequency identification (RFID), infrared data association (IrDA), ultra-wideband (UWB), ZigBee, etc., may be used.

The location information module 115 is a module for checking or acquiring a location (or position) of the mobile terminal. A typical example of the location information module is a GPS (Global Positioning System). According to the current technology, the GPS module 115 calculates distance information from three or more satellites and accurate time information and applies trigonometry to the calculated information to thereby accurately calculate three-dimensional current location information according to latitude, longitude, and altitude. Currently, a method for calculating location and time information by using three satellites and correcting an error of the calculated location and time information by using another one satellite. In addition, the GPS module 115 can calculate speed information by continuously calculating the current location in real time.

The A/V input unit 120 is configured to provide audio or video signal input to the mobile terminal. The A/V input unit 120 may include a camera 121 and a microphone 122. The camera 121 receives and processes image frames of still pictures or video obtained by image sensors in a video call mode or a capturing mode. The processed image frames may be displayed on a display unit 151.

The image frames processed by the camera 121 may be stored in the memory 160 or transmitted to the exterior via the wireless communication unit 110. Two or more cameras 121 may be provided according to the configuration of the mobile terminal.

The microphone 122 may receive an external audio signal while the mobile terminal is in a particular mode, such as a phone call mode, a recording mode, a voice recognition mode, or the like. This audio signal is processed into digital data. The processed digital data is converted for output into a format transmittable to a mobile communication base station via the mobile communication module 112 in case of the phone call mode. The microphone 122 may include assorted noise removing algorithms to remove noise generated in the course of receiving the external audio signal.

The user input unit 130 may generate input data inputted by a user to control the operation of the mobile terminal. The user input unit 130 may include a keypad, a dome switch, a touchpad (e.g., static pressure/capacitance), a jog wheel, a jog switch and the like.

The sensing unit 140 provides status measurements of various aspects of the mobile terminal. For instance, the sensing unit 140 may detect an open/close status of the mobile terminal, a change in a location of the mobile terminal 100, a presence or absence of user contact with the mobile terminal 100, the location of the mobile terminal 100, acceleration/deceleration of the mobile terminal 100, and the like, so as to generate a sensing signal for controlling the operation of the mobile terminal 100. For example, regarding a slide-type mobile terminal, the sensing unit 140 may sense whether a sliding portion of the mobile terminal is open or closed. Other examples include sensing functions, such as the sensing unit 140 sensing the presence or absence of power provided by the power supply unit 190, the presence or absence of a coupling or other connection between the interface unit 170 and an external device. The sensing unit 140 may include a proximity sensor.

The output unit 150 is configured to output an audio signal, a video signal or a tactile signal. The output unit 150 may include a display unit 151, an audio output module 152, an alarm 153, a haptic module 154, and the like.

The display unit 151 may output information processed in the mobile terminal 100. For example, when the mobile terminal is operating in a phone call mode, the display unit 151 will provide a User Interface (UI) or a Graphic User Interface (GUI) which includes information associated with the call. As another example, if the mobile terminal is in a video call mode or a capturing mode, the display unit 151 may additionally or alternatively display images captured and/or received, UI, or GUI.

The display unit 151 may be implemented using, for example, at least one of a Liquid Crystal Display (LCD), a Thin Film Transistor-Liquid Crystal Display (TFT-LCD), an Organic Light-Emitting Diode (OLED), a flexible display, a three-dimensional (3D) display, or the like. Some of such displays 151 may be implemented as a transparent type or an optical transparent type through which the exterior is visible, which is referred to as 'transparent display'. A representative example of the transparent display may include a Transparent OLED (TOLED), and the like. The rear surface of the display unit 151 may also be implemented to be optically transparent. Under this configuration, a user can view an object positioned at a rear side of a terminal body through a region occupied by the display unit 151 of the terminal body.

The display unit 151 may be implemented in two or more in number according to a configured aspect of the mobile terminal 100. For instance, a plurality of the display units 151 may be arranged on one surface to be spaced apart from or integrated with each other, or may be arranged on different surfaces.

Here, if the display unit 151 and a touch sensitive sensor (referred to as a touch sensor) have a layered structure therebetween, the structure may be referred to as a touch screen. The display unit 151 may be used as an input device rather than an output device. The touch sensor may be implemented as a touch film, a touch sheet, a touch pad, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller (not shown). The touch controller processes the received signals, and then transmits corresponding data to the controller 180. Accordingly, the controller 180 may sense which region of the display unit 151 has been touched.

A proximity sensor may be arranged at an inner region of the mobile terminal 100 covered by the touch screen, or near the touch screen. The proximity sensor indicates a sensor to sense presence or absence of an object approaching to a surface to be sensed, or an object disposed near a surface to be sensed, by using an electromagnetic field or infrared rays without a mechanical contact. The proximity sensor has a longer lifespan and a more enhanced utility than a contact sensor.

The proximity sensor may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electromagnetic field. In this case, the touch screen (touch sensor) may be categorized into a proximity sensor.

Hereinafter, for the sake of brief explanation, a status that the pointer is positioned to be proximate onto the touch screen without contact will be referred to as 'proximity touch', whereas a status that the pointer substantially comes in contact with the touch screen will be referred to as 'contact touch'. For the position corresponding to the proximity touch of the pointer on the touch screen, such position corresponds to a position where the pointer faces perpendicular to the touch screen upon the proximity touch of the pointer.

The proximity sensor senses proximity touch, and proximity touch patterns (e.g., distance, direction, speed, time, position, moving status, etc.). Information relating to the sensed proximity touch and the sensed proximity touch patterns may be output onto the touch screen.

The audio output module 152 may output audio data received from the wireless communication unit 110 or stored in the memory 160, in a call-receiving mode, a call-placing mode, a recording mode, a voice recognition mode, a broadcast reception mode, and so on. The audio output module 152 may output audio signals relating to functions performed in the mobile terminal 100, e.g., sound alarming a call received or a message received, and so on. The audio output module 152 may include a receiver, a speaker, a buzzer, and so on.

The alarm 153 outputs signals notifying occurrence of events from the mobile terminal 100. The events occurring from the mobile terminal 100 may include call received, message received, key signal input, touch input, and so on. The alarm 153 may output not only video or audio signals, but also other types of signals such as signals notifying occurrence of events in a vibration manner. Since the video or audio signals can be output through the display unit 151 or the audio output unit 152, the display unit 151 and the audio output module 152 may be categorized into a part of the alarm 153.

The memory 160 may store a program for the processing and control of the controller 180. Alternatively, the memory 160 may temporarily store input/output data (e.g., phonebook data, messages, still images, video and the like). Also, the memory 160 may store data related to various patterns of vibrations and audio output upon the touch input on the touch screen.

The memory 160 may be implemented using any type of suitable storage medium including a flash memory type, a hard disk type, a multimedia card imcro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The controller 180 typically controls the overall operations of the mobile terminal 100. For example, the controller 180 performs the control and processing associated with telephony calls, data communications, video calls, and the like. The controller 180 may include a multimedia module 181 which provides multimedia playback. The multimedia module 181 may be configured as part of the controller 180 or as a separate component.

The controller 180 can perform a pattern recognition processing so as to recognize writing or drawing input on the touch screen as text or image.

The power supply unit 190 provides power required by various components under the control of the controller 180. The provided power may be internal power, external power, or combination thereof.

Various embodiments described herein may be implemented in a computer-readable medium using, for example, software, hardware, or some combination thereof.

For a hardware implementation, the embodiments described herein may be implemented within one or more of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, micro processors, other electronic units designed to perform the functions described herein, or a selective combination thereof. In some cases, such embodiments are implemented by the controller 180.

For software implementation, the embodiments such as procedures and functions may be implemented together with separate software modules each of which performs at least one of functions and operations. The software codes can be implemented with a software application written in any suitable programming language. Also, the software codes may be stored in the memory 160 and executed by the controller 180.

The foregoing embodiments and advantages are merely exemplary and are not to be construed as limiting the present disclosure. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

It should be understood that the above-described embodiments are not limited by any of the details of the foregoing description, unless otherwise specified, but rather should be construed within its scope as defined in the appended claims.

**Claims**

**1.** An electronic device, comprising:

a terminal body having a display (151) mounted thereon; and
a window (200) disposed on a front surface of the display,
wherein the window comprises:

a base layer (210); and
a protective layer (220) disposed outside the base layer, and having an anti-fingerprint pattern (201) that includes micro-protrusions (230) protruding from a surface of the protective layer by a predetermined height (e) with a repeated and regular structure,
wherein a first horizontal sectional area (S1) of each micro-protrusion at a height of 1/5(e) and a second horizontal sectional area (S2) of each micro-protrusion at a height of 4/5(e) satisfy a following relation, $0.8S1 < S2 < S1$,
wherein a ratio (n) of total sectional areas of lower ends of the micro-protrusions (230) with respect to a surface area of the protective layer (220) is in a range of 1 ~ 40 %,
wherein the predetermined height (e) of the protrusion (230) is in a range of 5 $\mu$m ~ 30 $\mu$m,
wherein the protective layer (220) is configured such that a thickness of the protective layer (220), except for the micro-protrusions (230), is more than 9 $\mu$m,
wherein the micro-protrusions (230) are configured such that an average pitch between the micro-protrusions (230) is in a range of 10 $\mu$m ~ 53 $\mu$m,
wherein the average pitch (g; $\mu$m) between the micro-protrusions, the height (e; $\mu$m) of the micro-protrusion, and the ratio (n; %) of total sectional areas of lower ends of the micro-protrusions with respect to a surface area of the protective layer satisfy a following relation,

$$15 \ \mu m^2/\% < (g \times e/n) < 105 \ \mu m^2/\%.$$

**2.** The electronic device of claim 1, wherein the protective layer (220) comprises a ultraviolet (UV) cure resin.

**3.** The electronic device of claim 1 or 2, wherein the protective layer (220) has a refractive index in a range of 1.45 ~ 1.59.

**4.** The electronic device of any one of claims 1 to 3, wherein the electronic device comprises one of:

a mobile terminal comprising one of a portable phone, a smart phone, a notebook computer, a digital broadcasting terminal, a Personal Digital Assistant (PDA), a Portable Multimedia Player (PMP), a navigation system; and a fixed terminal comprising one of a digital TV and a desktop computer.

**Patentansprüche**

**1.** Elektronische Vorrichtung umfassend:

einen Endgerätekörper mit einer daran angebrachten Anzeige (150), und ein an einer Vorderfläche der Anzeige angeordnetes Fenster (200), wobei das Fenster eine Basisschicht (210) sowie eine außerhalb der Basisschicht angeordnete Schutzschicht (220) mit einem Antifingerabdruck-Muster (201) umfasst, welches Mikrovorsprünge (230) aufweist, die von einer Oberfläche der Schutzschicht um eine vorbestimmte Höhe (e) mit einer sich wiederholenden und regelmäßigen Struktur vorstehen, wobei eine erste horizontale Querschnittsfläche (S1) jedes Mikrovorsprungs bei einer Höhe von 1/5 (e) und eine zweite horizontale Querschnittsfläche (S2) jedes Mikrovorsprungs bei einer Höhe von 4/5 (e) der folgenden Beziehung genügen: 0,8 S1 < S2 < S1, wobei ein Verhältnis (n) von Gesamtquerschnittsflächen von unteren Enden der Mikrovorsprünge (230) bezogen auf eine Flächengröße der Schutzschicht (220) in einem Bereich von 1 bis 40% liegt, wobei die vorbestimmte Höhe (e) des Vorsprungs (230) in einem Bereich von 5 $\mu m$ bis 30 $\mu m$ liegt, wobei die Schutzschicht (220) derart ausgebildet ist, dass eine Dicke der Schutzschicht (220) ohne die Mikrovorsprünge (230) mehr als 9 $\mu m$ beträgt, wobei die Mikrovorsprünge (230) derart ausgebildet sind, dass ein durchschnittlicher Zwischenraum zwischen den Mikrovorsprüngen (230) in einem Bereich von 10 $\mu m$ bis 53 $\mu m$ liegt, wobei der durchschnittliche Zwischenraum (g; $\mu m$) zwischen den Mikrovorsprüngen, die Höhe (e; $\mu m$) des Mikrovorsprungs und das Verhältnis (n; %) von Gesamtquerschnittsflächen von unteren Enden der Mikrovorsprünge mit Bezug auf eine Flächengröße der Schutzschicht der folgenden Beziehung genügen: $15 \ \mu m^2/\% < (g.e/n) < 105 \ \mu m^2/\%$.

**2.** Elektronische Vorrichtung nach Anspruch 1, wobei die Schutzschicht (220) ein UV-härtendes (UV: Ultraviolett) Harz umfasst.

**3.** Elektronische Vorrichtung nach Anspruch 1 oder 2, wobei die Schutzschicht (220) einen Brechungsindex in einem Bereich von 1,45 bis 1,59 besitzt.

**4.** Elektronische Vorrichtung nach einem der Ansprüche 1 bis 3, wobei die elektronische Vorrichtung umfasst:

ein mobiles Endgerät, welches ein tragbares Telefon, ein Smartphone, einen Notebook-Computer, ein Endgerät für digitalen Rundfunk, einen persönlichen digitalen Assistenten (PDA) einen tragbaren Multimediaabspieler (PMP) oder ein Navigationssystem umfasst, oder ein feststehendes Endgerät, welches einen digitalen Fernseher oder einen Desktop-Computer umfasst.

**Revendications**

**1.** Dispositif électronique, comprenant :

un corps de terminal ayant un afficheur (151) monté sur celui-ci ; et

une fenêtre (200) disposée sur une surface avant de l'afficheur,

dans lequel la fenêtre comprend :

une couche de base (210) ; et

une couche de protection (220) disposée à l'extérieur de la couche de base, et ayant un motif anti-traces de doigts (201) qui inclut des micro-saillies (230) faisant saillie d'une surface de la couche de protection d'une hauteur (e) prédéterminée avec une structure répétée et régulière,

dans lequel une première section horizontale (S1) de chaque micro-saillie à une hauteur de 1/5(e) et une deuxième section horizontale (S2) de chaque micro-saillie à une hauteur de 4/5(e) satisfont une relation suivante, $0,8 S1 < S2 < S1$,

dans lequel un rapport (n) des sections totales d'extrémités inférieures des micro-saillies (230) par rapport à une superficie de la couche de protection (220) est dans une plage de $1 \sim 40$ %,

dans lequel la hauteur (e) prédéterminée de la saille (230) est dans une plage de 5 $\mu$m - 30 $\mu$m,

dans lequel la couche de protection (220) est configurée de telle manière qu'une épaisseur de la couche de protection (220), à l'exception des micro-saillies (230), est supérieure à 9 $\mu$m,

dans lequel les micro-saillies (230) sont configurées de telle manière qu'un pas moyen entre les micro-saillies (230) est dans une plage de 10 $\mu$m $\sim$ 53 $\mu$m,

dans lequel le pas moyen (g ; $\mu$m) entre les micro-saillies, la hauteur (e ; $\mu$m) de la micro-saillie, et le rapport (n ; %) des sections totales d'extrémités inférieures des micro-saillies par rapport à une superficie de la couche de protection satisfont une relation suivante, 15 $\mu$m$^2$/% < (gxe/n) < 105 $\mu$m$^2$/%.

2. Dispositif électronique selon la revendication 1, dans lequel la couche de protection (220) comprend une résine à durcissement aux ultraviolets (UV).

3. Dispositif électronique selon la revendication 1 ou 2, dans lequel la couche de protection (220) a un indice de réfraction dans une plage de 1,45 $\sim$ 1,59.

4. Dispositif électronique selon l'une quelconque des revendications 1 à 3, dans lequel le dispositif électronique comprend un parmi :

un terminal mobile comprenant un parmi un téléphone portable, un téléphone intelligent, un ordinateur portable, un terminal de radiodiffusion numérique, un assistant numérique personnel (PDA), un lecteur multimédia portable (PMP), un système de navigation ; et

un terminal fixe comprenant un parmi un téléviseur numérique et un ordinateur de bureau.

# FIG. 1

# FIG. 2

# FIG. 3

# FIG. 4

# FIG. 5

# FIG. 6

## FIG. 7A

210

## FIG. 7B

220
210

## FIG. 7C

270
271

⇩

220
210

## FIG. 7D

270
230
220
210

UV

## FIG. 7E

200
230
220
210

FIG. 8

FIG. 9

# FIG. 10

# FIG. 11

190

POWER SUPPLY UNIT

100

180

110

WIRELESS COMMUNICATION UNIT

111 — BROADCASTING RECEIVING MODULE

112 — MOBILE COMMUNICATION MODULE

113 — WIRELESS INTERNET MODULE

114 — SHORT-RANGE COMMUNICATION MODULE

115 — POSITION-LOCATION MODULE

150

OUTPUT UNIT

DISPLAY UNIT — 151

AUDIO OUTPUT MODULE — 152

ALARM UNIT — 153

CONTROLLER

120

A/V INPUT UNIT

121 — CAMERA

122 — MICROPHONE

MULTIMEDIA MODULE — 181

130

USER INPUT UNIT

131,132 — SIDE KEYS

133 — TOUCH SENSOR

140 — SENSING UNIT

MEMORY — 160

INTERFACE UNIT — 170

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6950234 B1
- US 20060132945 A1
- WO 2008116994 A2
- US 20090041984 A1
- US 20100033818 A1